# EUROPEAN PATENT APPLICATION

(11) **EP 1 486 948 A1**
(43) Date of publication of application: **15.12.2004**
(21) Application number: 04013126.0
(22) Date of filing: 03.06.2004
(51) Int. Cl.: G10K 11/18, G10H 1/00, G06F 17/60

(54) **Music data delivery system which enables to download a music data to an on-board player of a rental car and the music data delivery method of the same**

(30) Priority: 05.06.2003 JP 2003160742
(71) Applicant: NEC CORPORATION, Tokyo (JP)
(72) Inventor: Shishido, Jo, c/o NEC Communication Systems, Ltd., Minato-ku, Tokyo (JP)
(74) Representative: VOSSIUS & PARTNER

(57) **Abstract**

A music data delivery system includes a rental car service system(10) and a music distribution service system(20). The rental car service system(10) receives a reservation request data indicating a request for a reservation of a rental car from an information terminal (80). It carries out a reservation processing to generate a reservation data, and transmits the reservation data to the information terminal(80). The reservation data includes an on-board audio device ID data indicating an on-board audio device on the rental car. The music distribution service system(20) receives the reservation data and a music ID data indicating a music data used in the rental car from the information terminal(80). It transmits a music data corresponding to the music ID data in the predetermined time zone to an on-board audio device (400).

## Description

The present invention is related to a music data delivery system and a music data delivery method. More particularly, the present invention related to the music data delivery system which enables to download a music data to an on-board player of a rental car and the music data delivery method of the same.

Most rental car users bring MDs (mini discs) and CDs (compact discs) originally prepared by themselves to listen to the music during their driving, though these discs may be a load in a travel by the rental car. The MDs and the CDs had been matched the feelings of users when they made the original MDs and bought the CDs, but it is not always match the feelings for the users during the usage of the rental car.

To solve this problem, a technique is disclosed in Japanese Laid Open Patent Application (JP2003-29770A), wherein a music data is recorded in a memory media such as a CD-R at a rental car office and it is lent for the user. Also, Japanese Laid Open Patent Application (JP2002-351475A) discloses the method for downloading music through the Internet by a mobile phone that is connected to an on-board audio apparatus.

The details of the above-mentioned Japanese Laid Open Patent Application are as follows. Japanese Laid Open Patent Application (JP2003-29770A) discloses a rental car system and a vehicle apparatus for the same. The rental car system is configured by an office apparatus provided in the rental car office and a vehicle apparatus installed in a rental car. The office apparatus writes a rental data in a rental memory media so as to be possible to use for the vehicle apparatus. The office apparatus reads out the rental data written in the rental memory media, and uses the read out data.

Also, Japanese Laid Open Patent Application (JP2002-351475A) discloses an on-board audio system. The on-board audio system includes a delivery center which delivers a music data or a picture data, an audio apparatus on board which is equipped interior of the vehicle, a mobile communication apparatus to connect with the audio apparatus on board, a memory media attached to the audio apparatus to record the delivered music data or the delivered picture data. The user in the vehicle accesses the delivery center by using the mobile communication apparatus through the Internet. At this time, when the vehicle and the user meet a condition, the music data or the picture data requested by the user are downloaded to the audio apparatus on board through the mobile communication apparatus.

In conjunction with the above description, Japanese Laid Open Patent Application (JP2002-39770A), discloses the following an entertainment data storing and delivery system. This entertainment data storing and delivery system provides a management apparatus to compile and store an entertainment data such as music and picture at a management and delivery center. Users order the management and delivery center to store the entertainment data and the management apparatus stores the data. A data transmission and play apparatus on board requests a delivery of the entertainment data, then, the stored entertainment data is delivered to the data transmission and play apparatus corresponding to the request.

Also, in conjunction with the above description, Japanese Laid Open Patent Application (JP2002-41060A) discloses the following a music data delivery system. The music data delivery system includes a server (10) and communication means for the server (20,30) which are provided at a fixed area (A), and communication means (50,60) and data processing means (70,100) which are loaded on a vehicle (B). The server transmits a musical data through the communication means for the said server. The data processing means processes the transmission music data to be inputted and stored through the communication means for the vehicle. The communication means for the server is a communication means of narrow band for the server which is possible to communicate by a radio. The communication means for the vehicle is a communication means of narrow band for the vehicle which is possible to communicate by the communication means of narrow band for the server and the radio.

Also, in conjunction with the above description, Japanese Laid Open Patent Application (JP2002-49375A) discloses the following a music data delivery method and a music data delivery system. Plural types of music data are compressed and delivered all together by a radio in the music delivery system. The music data is received and downloaded all together to store. The downloaded and stored music data is played in every music data respectively.

Also, in conjunction with the above description, Japanese Laid Open Patent Application (JP2002-123441A) discloses a mobile data delivery system. According to the mobile data delivery system, a narrow band radio wave communication apparatus, which is installed in a mobile terminal, receives a data by a narrow band communication through an antenna as an infrastructure at the state that the antenna covers a predetermined communication area for the narrow band radio wave communication apparatus. At this time, a communication control is carried out in order to receive the data by using a client terminal, which is originally used for communication except of the narrow band communication.

Also, in conjunction with the above description, Japanese Laid Open Patent Application (JP2002-341875A) discloses the following a delivery method of music data. A music data is delivered to a user of transportation means from a delivery center or a shop in the delivery method of music data. The user transmits a request data including a request music data indicating desired music and a position data indicating current position to the delivery center through a terminal apparatus which is possible to connect with a data communication network. The delivery center, which received the request data from the user through the data communication network, delivers the music data corresponding to the request music data in the request data directly to the user through the data communication network, or the delivery center leads the user to get the music data at the shop selected on the basis of the position data in the request data.

Also, in conjunction with the above description, Japanese Laid Open Patent Application (JP2003-34201A) discloses the following a data play apparatus on board, a data platy method, and a data play program. The data play apparatus on board receives a digital data from a communication path with 2 systems at an interior of a vehicle, and plays the digital data. The data play apparatus on board includes a data receiving unit, a data memory unit, a key data receiving unit, a data play control unit and a data output unit. The data receiving unit receives the digital data which is encrypted from a data delivery terminal provided in a predetermined portion. The data memory unit stores the digital data received at the data receiving unit. The key data receiving unit receives a decoding key to decode the encrypted digital data through a mobile terminal. The data play control unit decoder and outputs the digital data stored in the data memory unit by the decoding key received by the key data receiving unit. The data output unit converts the digital data, which is outputted from the data play control unit, to a predetermined signal and outputs it.

The technique disclosed in JP2003-29770A has some problem. That is, the system to lend a memory media for the user must be provided in every rental car office. Therefore, it costs a lot for the rental car provider to use the system, such as a cost for providing and maintenance of the system, and a cost to train personnel to lend for user.

Also, the memory media such as a CD-R should be prepared every time in every provider, and the copyrights of the music data recorded in the memory media should be managed by a legally appropriate method. These also cause a lot of expense and bother.

In the technique disclosed in JP2002-351475A, the download is carried out even though the traffic in a mobile network is busy by a concentration of an ordinal telephone voice data. Therefore, it is very inefficient in the viewpoint of network resource of the mobile network.

Generally, as for a new download service for digital contents, copyright holders and neighboring right holders of the digital contents are concerned with copying of the digital content illegally.

On the other hand, as for a music distribution service, users are supposed to buy a music data. The copyright law allows copying the bought music data into memory media for personal use and the user indeed desires to copy the music data. Therefore, the music distribution service always drifts into a dilemma between the legal demand and the user demand. This causes the difficulty of development of digital contents distribution service (business) by the Internet or the like. In other word, it is fundamentally difficult for a mobile terminal, in which the copyright holder cannot manage the contents, to provide music as business.

As for another service providing music data, neither a broadcasting of music data nor a selling a recording media with music data, a jukebox service is exemplified. The jukebox service is the charged service in which the user can listen to the desirable music only for a certain fixed period at only at a certain fixed place. In the conventional jukebox service, the jukebox contains an apparatus storing CDs and coins. Therefore, it is not possible to use in the vehicle.

As a service method for listening to charged music in the rental car, it may be supposed to lend (or rent) CDs stored in the rental car office for the user of the rental car. It must be stocked so many CDs to correspond the various needs of users. That causes the very high cost in this service method.

Therefore, an object of the present invention is to provide a music data delivery system and a music data delivery method that provides music data to be played in a rental car with lower cost and less loaded to resources of the communication network than the conventional method.

Another object of the present invention is to provide a music data delivery system and a music data delivery method that can certainly collect fees of provided music data from the user.

Still another object of the present invention is to provide a music data delivery system and a music data delivery method that allow the user to listen to desirable music in the rental car.

Yet still another object of the present invention is to provide a music data delivery system and a music data delivery method that can provide the music data to the rental car without an infringement of copyrights and neighboring rights.

This and other objects, features and advantages of the present invention will be readily ascertained by referring to the following description and drawings.

In order to achieve an aspect of the present invention, the present invention provides a music data delivery system including a rental car service system and a music distribution service system. The rental car service system receives a reservation request data, which indicates a request for a reservation of a rental car of a user, from an information terminal through a communication network. It carries out a reservation processing for the reservation to generate a reservation data based on the reservation request data. It transmits the reservation data to the information terminal through the communication network. The reservation data includes a reservation ID data indicating an identification of the reservation, an on-board audio device ID data indicating an identification of an on-board audio device on the rental car, and a rental period data indicating a rental period of the rental car. The music distribution service system receives the reservation data and a music ID data from the information terminal through the communication network. The music ID data indicates an identification of a music data for using in the rental period requested by the user. The music distribution service system stores the music ID data and the reservation data in a memory device as a usage data. It transmits a music data corresponding to the music ID data in the predetermined time zone to an on-board audio device corresponding to the on-board audio device ID data.

In the music data delivery system according to the above present invention, the rental car service system transmits a link data together with the reservation data to the information terminal through the communication network. The link data indicates a data for linking the music distribution service system in the communication network. The information terminal sends the reservation data and the music ID data to the music distribution service system based on the link data.

In the music data delivery system according to the above present invention, traffic of the communication network is low in the predetermined time zone.

The music data delivery system according to the above present invention, further includes the on-board audio device. The music distribution service system transmits an acquisition request start data to the on-board audio device before transmitting the music data to the on-board audio device. The acquisition request start data indicates directing of an acquisition of the music data in the predetermined time zone and includes the music ID data and an acquisition ID data. The acquisition ID data indicates an identification of the acquisition. The on-board audio device transmits the music request data to the music distribution service system in the predetermined time zone in response to the acquisition request start data. The music request data indicates a request for the music data and includes the music ID data and the acquisition ID data. The music distribution service system transmits the music data to the on-board audio device in the predetermined time zone in response to the music request data.

In the music data delivery system according to the above present invention, the on-board audio device plays the music data in response to the user's operation. It makes and updates a history data stored in a memory device. It transmits the history data to the music distribution service system in the predetermined time zone. The history data indicates a history that the on-board audio device plays the music data.

In the music data delivery system according to the above present invention, the music distribution service system judges an end of the rental period based on the reservation data. It transmits a deletion request data to the on-board audio device. The deletion request data indicates a request for deleting the music data. The on-board audio device deletes the music data in response to the deletion request data.

In the music data delivery system according to the above present invention, the music distribution service system receives the on-board audio device ID data, the acquisition ID data and an additional music ID data in the rental period from the on-board audio device. The additional music ID data indicates an identification of an additional music data requested by the user. It transmits a music data corresponding to the additional music ID data to the on-board audio device based on the on-board audio device ID data, the acquisition ID data and the additional music ID data.

In the music data delivery system according to the present invention, the music distribution service system searches for a plurality of candidate music ID data from a music database storing music data, based on a desired candidate data received from the information terminal. The plurality of candidate music ID data indicates identifications of candidate music data. The candidate music data indicate candidates which the user requests for using in the rental period. The desired candidate data are data related and corresponding to the candidate music data. The music distribution service system transmits the plurality of candidate music ID data to the information terminal. It receives the music ID data selected from the plurality of candidate music ID data by the user.

In order to achieve another aspect of the present invention, the present invention provides a rental car service system including a reservation receiving section and a reservation section. The reservation receiving section receives a reservation request data indicating a request for a reservation of a rental car of a user from an information terminal through a communication network. The reservation section carries out a reservation processing for the reservation to generate a reservation data based on the reservation request data. The reservation data includes a reservation ID data indicating an identification of the reservation, an on-board audio device ID data indicating an identification of an on-board audio device on the rental car, and a rental period data indicating a rental period of the rental car. The reservation receiving section transmits the reservation data and a link data to the information terminal through the communication network. The link data indicates a link to a music distribution service system that executes a service to distribute a charged music data.

In order to achieve another aspect of the present invention, the present invention provides a music distribution service system including a selection receiving section, a user management section and a distribution section. The selection receiving section receives a reservation data and a music ID data from an information terminal through a communication network. The reservation data indicates a reservation of a rental car of a user. The music ID data indicates an identification of a music data for using in the rental period requested by the user. The reservation data includes a reservation ID data indicating an identification of the reservation, an on-board audio device ID data indicating an identification of an on-board audio device on the rental car, and a rental period data indicating a rental period of the rental car. The user management section stores the music ID and the reservation data in a memory device as a usage data. The distribution section transmits a music data corresponding to the music ID data in the predetermined time zone to an on-board audio device corresponding to the on-board audio device ID data.

The music distribution service system according to the present invention, further includes a request distribution section. The request distribution section transmits an acquisition request start data to the on-board audio device before transmitting the music data to the on-board audio device. The acquisition request start data indicates directing of an acquisition of the music data in the predetermined time zone and includes the music ID data and an acquisition ID data indicating an identification of the acquisition. The distribution section transmits the music data to the on-board audio device in the predetermined time zone in response to a music request data. The music request data indicates a request for the music data from the on-board audio device based on the acquisition request start data in the predetermined time zone in response to the acquisition request start data, and includes the music ID data and the acquisition ID data.

The music distribution service system according to the present invention, further includes a request receiving section. The request receiving section receives a history data from the on-board audio device in the predetermined time zone, and transmits the history data to the user management section. The history data indicates a history that the on-board audio device plays the music data.

In the music distribution service system according to the present invention, the request receiving section receives the on-board audio device ID data, the acquisition ID data and an additional music ID data in the rental period from the on-board audio device. The additional music ID data indicates an identification of an additional music data requested by the user. The user management section transmits a music data corresponding to the additional music ID data to the on-board audio device based on the on-board audio device ID data, the acquisition ID data and the additional music ID data.

In the music distribution service system according to the present invention, the user management section judges an end of the rental period based on the reservation data. It transmits a deletion request data to the on-board audio device. The deletion request data indicates a request of deleting the music data.

In the music distribution service system according to the present invention, the selection receiving section searches for a plurality of candidate music ID data from a music database storing music data, based on a desired candidate data received from the information terminal. The plurality of candidate music ID data indicates identifications of candidate music data. The candidate music data indicate candidates which the user requests for using in the rental period. The desired candidate data are data related and corresponding to the candidate music data. The selection receiving section transmits the plurality of candidate music ID data to the information terminal, and receives the music ID data selected from the plurality of candidate music ID data by the user.

In order to achieve still another aspect of the present invention, the present invention provides a music data delivery method including: (a) a rental car service system receiving a reservation request data indicating a request for a reservation of a rental car of a user from an information terminal through a communication network; (b) the rental car service system carrying out a reservation processing for the reservation to generate a reservation data based on the reservation request data, and transmitting the reservation data to the information terminal through the communication network, wherein the reservation data includes a reservation ID data indicating an identification of the reservation, an on-board audio device ID data indicating an identification of an on-board audio device on the rental car, and a rental period data indicating a rental period of the rental car; (c) the music distribution service system receiving the reservation data and a music ID data indicating an identification of a music data for using in the rental period requested by the user from the information terminal through the communication network; (d) the music distribution service system storing the music ID data and the reservation data in a memory device as a usage data; and (e) the music distribution service system transmitting a music data corresponding to the music ID data in the predetermined time zone to an on-board audio device corresponding to the on-board audio device ID data.

In the music data delivery method according to the present invention, the step (e) includes: (e1) the music distribution service system transmitting an acquisition request start data to the on-board audio device before transmitting the music data to the on-board audio device, the acquisition request start data indicates directing of an acquisition of the music data in the predetermined time zone and includes the music ID data and an acquisition ID data indicating an identification of the acquisition, (e2) the on-board audio device transmitting the music request data to the music distribution service system in the predetermined time zone in response to the acquisition request start data, the music request data indicates a request for the music data and includes the music ID data and the acquisition ID data, and (e3) the music distribution service system transmitting the music data to the on-board audio device in the predetermined time zone in response to the music request data.

The music data delivery method according to the present invention, further includes (f) the on-board audio device playing the music data in response to the user's operation; (g) the on-board audio device making and updating a history data stored in a memory device; and (h) the on-board audio device transmits the history data to the music distribution service system in the predetermined time zone, the history data indicates a history that the on-board audio device plays the music data.

The music data delivery method according to the present invention, further includes (i) the music distribution service system judging an end of the rental period based on the reservation data; (j) the music distribution service system transmitting a deletion request data to the on-board audio device, the deletion request data indicates a request of deleting the music data; and (k) the on-board audio device deleting the music data in response to the deletion request data.

The music data delivery method according to the present invention, further includes (1) the music distribution service system receiving the on-board audio device ID data, the acquisition ID data and an additional music ID data indicating an identification of an additional music data requested by the user, in the rental period from the on-board audio device; and (m) the music distribution service system transmitting a music data corresponding to the additional music ID data to the on-board audio device based on the on-board audio device ID data, the acquisition ID data and the additional music ID data. 21. In the music data delivery method according to the present invention, the step (c) includes; (c1) the music distribution service system searching for a plurality of candidate music ID data from a music database storing music data, based on a desired candidate data received from the information terminal, wherein the plurality of candidate music ID data indicates identifications of candidate music data, the candidate music data indicate candidates which the user requests for using in the rental period, the desired candidate data are data related and corresponding to the candidate music data, (c2) the music distribution service system transmitting the plurality of candidate music ID data to the information terminal, and (c3) the music distribution service system receiving the music ID data selected from the plurality of candidate music ID data by the user.

In order to achieve yet still another aspect of the present invention, the present invention provides a computer program product embodied on a computer-readable medium and including code that, when executed, causes a computer to perform the following: (n) receiving a reservation request data indicating a request for a reservation of a rental car of a user from an information terminal through a communication network; (o) carrying out a reservation processing for the reservation to generate a reservation data based on the reservation request data; and (p) transmitting the reservation data and a link data to the information terminal through the communication network, the link data indicates a link to a music distribution service system that executes a service to distribute a charged music data. The reservation data includes a reservation ID data indicating an identification of the reservation, an on-board audio device ID data indicating an identification of an on-board audio device on the rental car, and a rental period data indicating a rental period of the rental car.

In order to achieve yet still another aspect of the present invention, the present invention provides a computer program product embodied on a computer-readable medium and including code that, when executed, causes a computer to perform the following: (q) receiving a reservation data and a music ID data from an information terminal through a communication network, wherein the reservation data indicates a reservation of a rental car of a user, the music ID data indicates an identification of a music data for using in the rental period requested by the user, the reservation data includes a reservation ID data indicating an identification of the reservation, an on-board audio device ID data indicating an identification of an on-board audio device on the rental car, and a rental period data indicating a rental period of the rental car; (r) storing the music ID and the reservation data in a memory device as a usage data; and (s) transmitting a music data corresponding to the music ID data in the predetermined time zone to an on-board audio device corresponding to the on-board audio device ID data.

In the computer program product according to the present invention, the step (s) includes: (s1) transmitting an acquisition demand data to the on-board audio device before transmitting the music data to the on-board audio device, wherein the acquisition demand data indicates prompting of an acquisition of the music data in the predetermined time zone and includes the music ID data and an acquisition ID data indicating an identification of the acquisition, and (s2) transmitting the music data to the on-board audio device in the predetermined time zone in response to a music request data. The music request data indicates a request for the music data from the on-board audio device based on the acquisition demand data in the predetermined time zone in response to the acquisition demand data, and includes the music ID data and the acquisition ID data.

The computer program product according to the present invention, further includes (t) receiving a history data from the on-board audio device in the predetermined time zone, and transmitting the history data to the user management section. The history data indicates a history that the on-board audio device plays the music data.

The computer program product according to the present invention, further includes (u) receiving the on-board audio device ID data, the acquisition ID data and an additional music ID data indicating an identification of an additional music data requested by the user, in the rental period from the on-board audio device; and (v) transmitting a music data corresponding to the additional music ID data to the on-board audio device based on the on-board audio device ID data, the acquisition ID data and the additional music ID data.

The computer program product according to present invention further includes: (w) judging an end of the rental period based on the reservation data, and transmits a deletion request data to the on-board audio device. The deletion request data indicates a request of deleting the music data.

In the computer program product according to the present invention, the step (q) includes (q1) searching for a plurality of candidate music ID data from a music database storing music data, based on a desired candidate data received from the information terminal, the plurality of candidate music ID data indicates identifications of candidate music data, the candidate music data indicate candidates which the user requests for using in the rental period, the desired candidate data are data related and corresponding to the candidate music data, and (q2) transmitting the plurality of candidate music ID data to the information terminal, and receives the music ID data selected from the plurality of candidate music ID data by the user.

Also, in order to achieve yet still another aspect of the present invention, the present invention provides computer program product with program code means for carrying out all steps according to the above present invention if the program runs on a computer.

The computer program product with program code means according to the above present invention which is stored on a storage means which can be read by the computer.
Fig. 1 is a schematic view showing an outline configuration of the first embodiment of the present invention;
Fig. 2 is a schematic view showing an outline when the user is provided with the music data by the music data delivery service;
Fig. 3 is a block diagram showing a configuration of the first embodiment according to the present invention;
Fig. 4 is a flowchart showing the reservation operation by the user;
Figs. 5 and 6 are flowcharts showing the operation when the user selects music;
Fig. 7 is a schematic view showing the preparation operation for usage;
Figs. 8 and 9 are flowcharts showing the preparation operation;
Fig. 10 is a schematic view showing the operation in using the rental car;
Fig. 11 is a flowchart showing the operation in using the rental car;
Fig. 12 is a schematic view showing the operation after using the rental car;
Fig. 13 is a flowchart showing the operation after using the rental car
Fig. 14 is a schematic view showing an outline configuration of the second embodiment of the present invention; and
Fig. 15 is a block diagram showing a configuration of the second embodiment according to the present invention.

Embodiments of a music data delivery system and a music data delivery method according to the present invention will be described below with reference to the attached drawings.

A first embodiment of the present invention is the system for a music data delivery service related to the Internet rental car reservation by a rental car company.

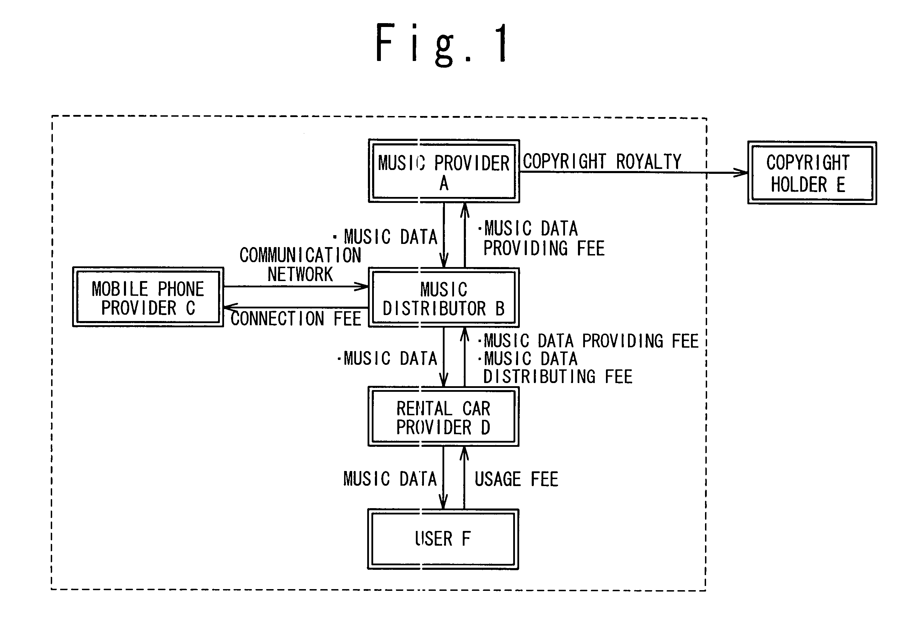

Fig. 1 is a schematic view showing an outline configuration of the first embodiment of the present invention.

As shown in Fig.1, this music data delivery service is provided by a music provider A, a music distributor B, a mobile phone provider C, and the rental car provider D. The music provider A provides music data to the music distributor B, collects music data providing fees corresponding to the provided music data from the music distributor B, and pays copyright royalties to the copyright holder E. The music distributor B receives the provided music data, and pays the music data providing fees. It also provides the provided music data to the rental car provider D and collects music data distributing fees and the music data providing fees from the rental car provider D. The rental car provider D receives the provided music data, and pays the music data distributing fees and the music data providing fees. It also provides the provided music data to a user F of the rental car and collects usage fees from the user F. The mobile phone provider C provides the communication network (lines) to at least music distributor B, the rental car provider D and the user F, and receives connection fees from them. The rental car provider D mainly provides this music delivery service to the user F of the rental car.

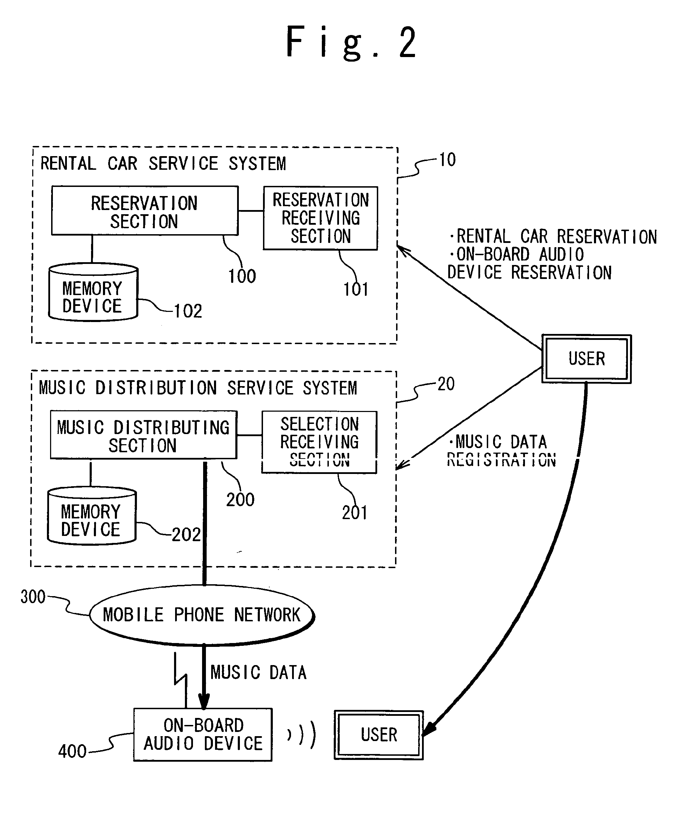

Fig. 2 is a schematic view showing an outline when the user is provided with the music data by the music data delivery service.

Referring to Fig. 2, the user of the renal car takes a reservation at a reservation service website of the Internet. The reservation service website is provided by a reservation section 100 and a reservation receiving section 101 of a rental car service system 10. When the user taking the reservation of the rental car (with an on-board audio device), the reservation section 100 resistors the user's reservation and stores in the memory device 102. It displays a checking button on the website of the Internet. The checking button allows the user to select whether or not the user applies the music data delivery service. After taking the reservation and selecting the music data delivery service, the user selects music, which he wants to listen to in the rental car, on the website. The selected music data are registered in a music distributing section 200 through the selection receiving section 201 and stored in the memory device 202 of the music distribution service system 20.

The music distributing section 200 transmits an encoded music data to an on-board audio device 400 as a music player in the rental car through a mobile phone network 300 in a time zone with a low traffic.

At this time, the on-board audio device 400 downloads a decode key data together with the encoded music data. Using the decode key data, the on-board audio device 400 decodes the encoded music data such that the user can listen to the music when he starts to use the rental car. When the user goes to a rental car office, he pays a predetermined fee to the rental car provider. The user is able to listen to the selected music repeatedly using the on-board audio device 400 until he returns his rental car.

When the user comes to the rental car provider office directly with no reservation of the Internet, the staff of the rental car provider registers the application of the music delivery service with the on-board audio device 400 on behalf of the user. The registration is carried out through the Internet from a personal computer or a mobile phone which are used generally at the office. The operation of the registration is same as the above-mentioned operation of the user.

It should be noted that all of the data stored in the on-board audio device 400 is deleted after the user returns the rental car after the arbitral time has passed.

Each fee among the providers shown in Fig. 1 is calculated by the music distributor B based on on-board device using data and selected music data stored in the music distributing section 200. The on-board device using data includes a data indicating a rental period (date) that the on-board audio device 400 is used. The selected music data includes a data indicating when and by whom the music is played and how many times the music is replayed.

The music distributor B charges the rental car provider D with the music data distributing fees. The music distributor B pays the mobile phone provider C for a connection fee according to the on-board device using data showing the period that the on-board audio device 400 is used, or for a frat rate fee in every on-board audio device 400 without considering the rental period.

Also, the music distributor B discloses the selected music data which is stored in the music distributing section 200 to the music provider A and pays the music provider A for a fee according to the number of playing times of music data, or a flat rate fee similar to the fee.

The music provider A pays copyright, neighboring rights holders and related associations for a fee as a copyright royalty based on requested times and delivery times, or a flat rate fee as the copyright royalty based on the assumed playing times in an arbitral period.

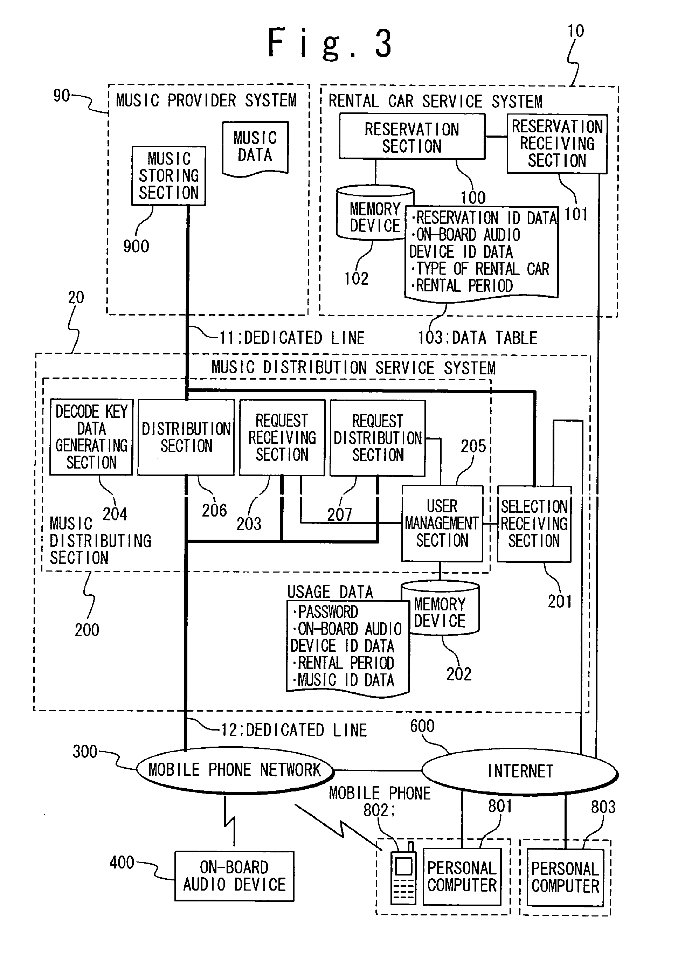

Fig. 3 is a block diagram showing a configuration of the first embodiment according to the present invention.

Referring to Fig. 3, the first embodiment of the music data delivery system includes the rental car service system 10, the music distribution service system 20, the music provider system 90 and the on-board audio device 400. Each system is an information processing apparatus or a set of information processing apparatus exemplified in a workstation and a personal computer. The music provider system 90 may be included in the music distribution service system 20. The mobile phone network 300 is provided by the CDMA (Code Division Multiple Access) technique of the mobile phone provider C. The on-board audio device 400 is installed in the rental car with no interface for an external storage (such as a CD-R, a memory card and so on), and is exclusively used for music delivery service.

The music provider system 90 and the music distribution service system 20 are connected with a dedicated line 11 in which an IP (Internet Protocol) communication is possible. The music distribution service system 20 and the mobile phone network 300 are connected with a dedicated line 12 in which an IP communication is possible. The rental car service system 10, the mobile phone network 300, the personal computer 803 of the user and the personal computer 801 of the rental car provider office are connected with each other through the Internet 600. The on-board audio device 400 and the mobile phone 802 of the rental car provider office are connected with the mobile phone network 300 with the radio wave. Hereinafter, the personal computer 803, the personal computer 801 and the mobile phone 802 are referred to as an information terminal.

The rental car service system 10 includes the reservation receiving section 101, the reservation section 100 and a memory device 102. Each section is an information processing apparatus or a computer program stored in a recording media of the information apparatus. The reservation receiving section 101 receives and accepts rental car reservation through the Internet 600, and uploads the website to Internet 600. The website has the checking button that allows the user to select whether or not the user applies the on-board audio device 400. The reservation section 100 receives and accepts the reservation of the rental car from the Internet 600 through the reservation receiving section 101, and registers a data of the reserved on-board audio device 400 to a user management section 205 in the music distributing section 200. The memory device 102 stores a data table 103 which includes an ID data (on-board audio device ID data) and the like of the on-board audio device 400.

The music provider system 90 includes a music storing section 900 storing digital music data. The section is an information processing apparatus or a computer program stored in a recording media of the information apparatus. The digital music data are encrypted. A proper ID (the selection ID) is given to each digital music data by the music provider A.

The music distribution service system 20 includes the music distributing section 200, a selection receiving section 201 and a memory device 202. The selection receiving section 201 is an information processing apparatus or a computer program stored in a recording media of the information apparatus. The music distributing section 200 is an information processing apparatus or a set of information processing apparatus. The selection receiving section 201 receives and accepts the music selection. The memory device 202 stores usage data (a password, an on-board audio device ID, a rental period, the selected music data and so on).

The music distributing section 200 includes a request receiving section 203, a decode key data generating section 204, a user management section 205, a distribution section 206, a request distribution section 207. Each section is an information processing apparatus or a computer program stored in a recording media of the information apparatus. The request receiving section 203 receives and accepts a request of selected music data from the on-board audio device 400. The decode key data generating section 204 generates a decode key data to decode the encoded music data. The user management section 205 manages the use of the music data in the on-board audio device 400. The distribution section 206 controls a distribution (delivery) of the music data. The request distribution section 207 transmits a request data to the on-board audio device 400.

Next, the operation of the first embodiment of the music data delivery service system according to the present invention will be described bellow with reference to the drawings

The operations of the system are classified in to four operations. That is (1) a reservation operation by the user, (2) a preparation operation for the system, (3) an operation in using the rental car, and (4) an operation after using the rental car.

Firstly, (1) the reservation operation by the user will be described.

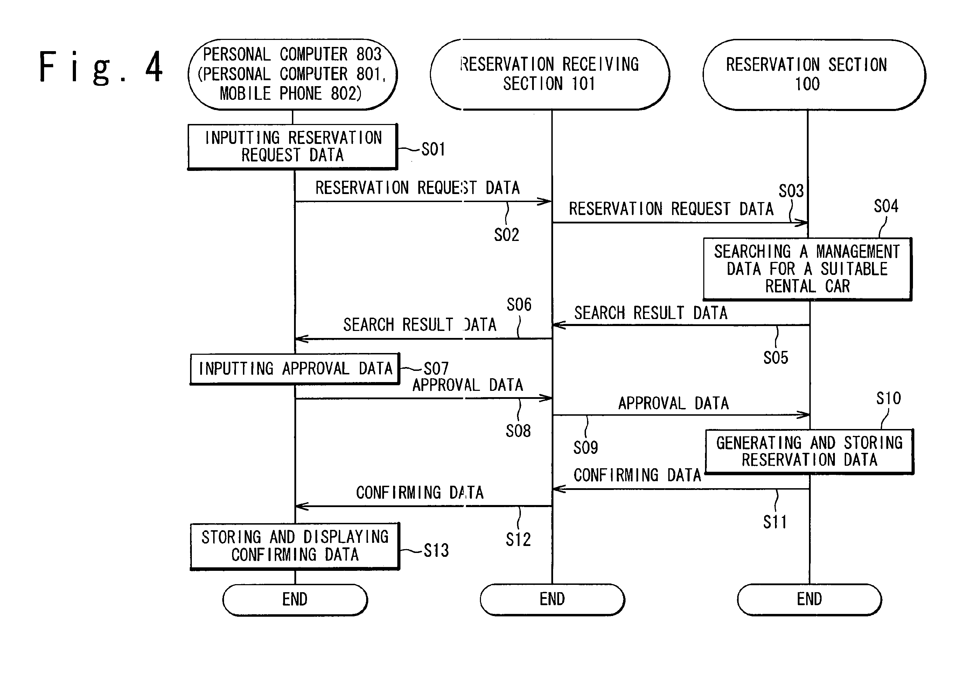

Fig. 4 is a flowchart showing the reservation operation by the user.

Referring to Fig. 4, the user inputs a reservation request data by using the personal computer 803 (the personal computer 801 or the mobile phone 802 may be also available) through the website (step S01) . The reservation request data includes a data whether one not the user applies the music data distribution service, in addition to data of a desirable type of a rental car and a desirable rental period. The website is provided for the reservation of a rental car uploaded by the reservation receiving section 101 on the Internet 600. Then, the personal computer 803 transmits the reservation request data to the reservation section 100 (step S03) through the reservation receiving section 101 (step S02) . The reservation section 100 searches a management data stored in the memory device 102 for a suitable rental car based on the type of the rental car, the rental period, whether one not the user applies the music data distribution service and the like (step S04) . Then, it transmits a search result data (the type of the rental car, a rental fee and the like) to the personal computer 803 (step S06) through the reservation receiving section 101 (step S05). The user inputs the approval data to approve the search result data (step S07). The personal computer 803 transmits the approval data to the reservation section 100 (step S09) through the reservation receiving section 101 (step S08). The reservation section 100 generates and stores (registers) a reservation data in the data table 103 in the memory device 102 (step S10).

The data table 103 (reservation data) includes the type of the rental car, the rental (usage) period, the on-board audio device ID (an identification of the on-board audio device 400 in the reserved rental car) and so on. The data table 103 also includes a reservation ID data, corresponding to the reservation data registered in the data table 103, generated at the timing of the completion of the registration by the reservation section 100. The reservation section 100 generates and transmits a confirming data to the personal computer 803 (step S12) through the reservation receiving section 101 (step S11). The confirming data includes a link button data and the reservation data including the reservation ID data. The link button data is for linking to the selection receiving section 201 that shows the button to select music data of the music data distribution service. The personal computer 803 stores the confirming data inside and displays the link button and the reservation data on a reservation completion screen (step S13).

Next, an operation when the user selects music will be described bellow with reference to the drawings.

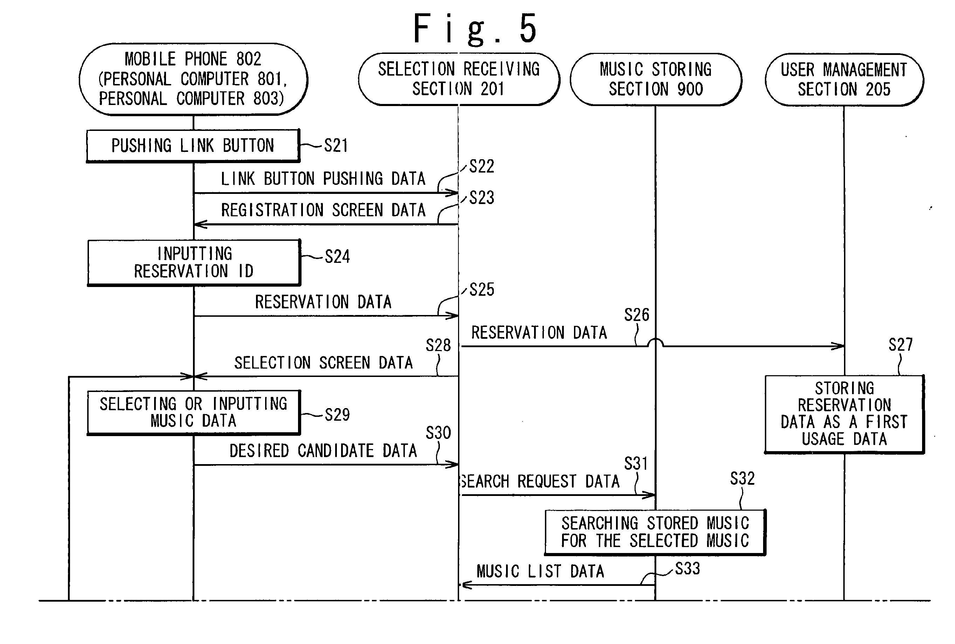

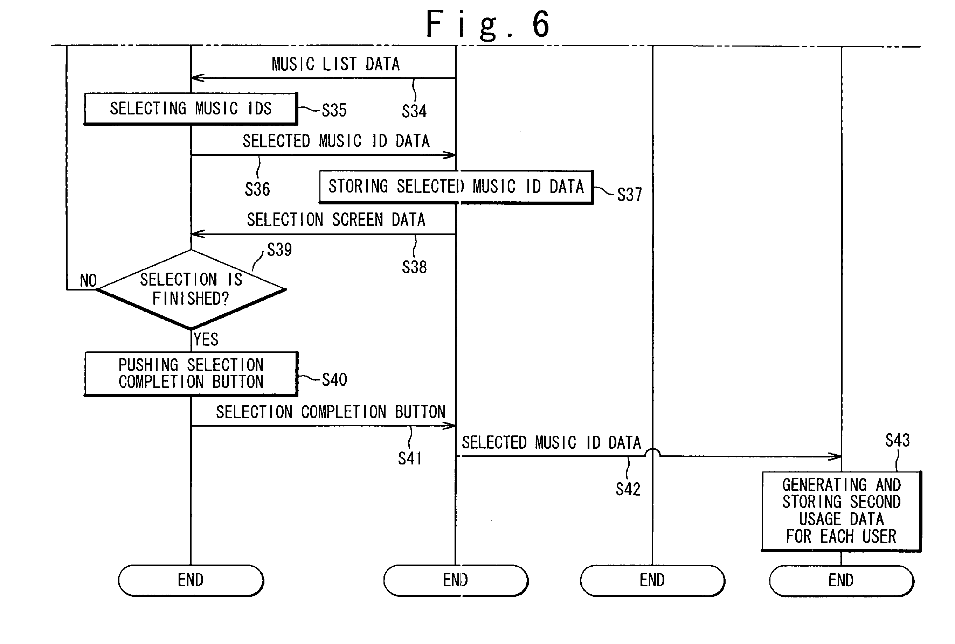

Figs. 5 and 6 are flowcharts showing the operation when the user selects music.

Referring to Figs. 5 and 6, when the link button to the selection receiving section 201 is pushed on the mentioned reservation completion screen (step S21), the personal computer 803 transmits a link button pushing data showing the push of the link button to the selection receiving section 201 (step S22). The selection receiving section 201 transmits a registration screen data to the personal computer 803 (step S23). The personal computer 803 displays the registration screen. The resignation screen is for registering the music data delivery service, including the reservation ID input column. When the user inputs the reservation ID into the reservation ID input column on the registration screen (step S24), the personal computer 803 transmits the reservation data to the selection receiving section 201 (step S25) . The selection receiving section 201 transmits the reservation data to the user management section 205 (step S26) . The user management section 205 stores (registers) the reservation data as a first usage data in the memory device 202 (step S27).

Continuously, the selection receiving section 201 transmits a selection screen data (step S28). For example, the selection screen provides a function of selecting a music data from artists. titles, release date (day, month and year) . A function of alphabetical search may be available for the artists and the titles. A function of numerical search may be available for the release year and month.

When the user selects or inputs some music data by the selection screen (step S29), the personal computer 803 transmits desired candidate data to the selection receiving section 201 (step S30 ) . The desired candidate data indicates candidates of the music selected by the user. The selection receiving section 201 transmits a search request data including the desired candidate data to the music storing section 900 in the music provider system 90 through dedicated line 11 (step S31). The music storing section 900 searches stored music for the selected music based on the desired candidate data (step S32), and transmits a music list data to the selection receiving section 201 (step s33). The music list data includes a plurality of music ID data indicating identification of the plurality of music data that matches the desired candidate data. The selection receiving section 201 transmits the music list data and a music list screen data to the personal computer 803 (step S34). The personal computer 803 displays the music list data on a music list screen.

The user selects some music IDs as the selection of some piece of music from the music list screen (step S35), and decides the playing order of them. Then, the user pushes a complete button, the personal computer 803 transmits selected music ID data and the playing order data to the selection receiving section 201 (step S36). The selection receiving section 201 stores the selected music ID data and the playing order data inside every user together with the reservation ID data (step S37), and transmits the selection screen data (step S38). When the user still want to select some music data (step S39: NO), the process from the steps S29 to S38 is continued. When the user finishes the selection (step S39: YES), the user pushes a selection completion button (step S40). The personal computer 803 transmits a selection completion data to the selection receiving section 201 (step S41). Then, the selection receiving section 201 transmits the selected music ID data of respective users to the user management section 205 (step S42). Receiving the selected music ID data of respective users with the playing order data, the user management section 205 generates a second usage data for each user, and stores (registers) the second usage data in the memory device 202 (step S43). The second usage data includes the first usage data (including the reservation ID data, the rental (usage) period data, the on-board audio device ID data), the playing order data and selected music ID data. The selected music ID is an identification corresponding to the selected music data.

The selection receiving section 201 keeps the second usage data in an arbitral period to be possible to modify by the user.

The user can access to the selection receiving section 201 by pushing the link button to the selection receiving section 201 in order to modify the usage data. Then, the user who accessed to the selection receiving section 201 can refer to the selected music ID data of respective users in the selection receiving section 201 by using the reservation ID. An operation to modify the usage data based on the referred result is same as the mentioned operation to selecting the music.

Secondly, (2) a preparation operation for the system is described bellow with reference to the drawings.

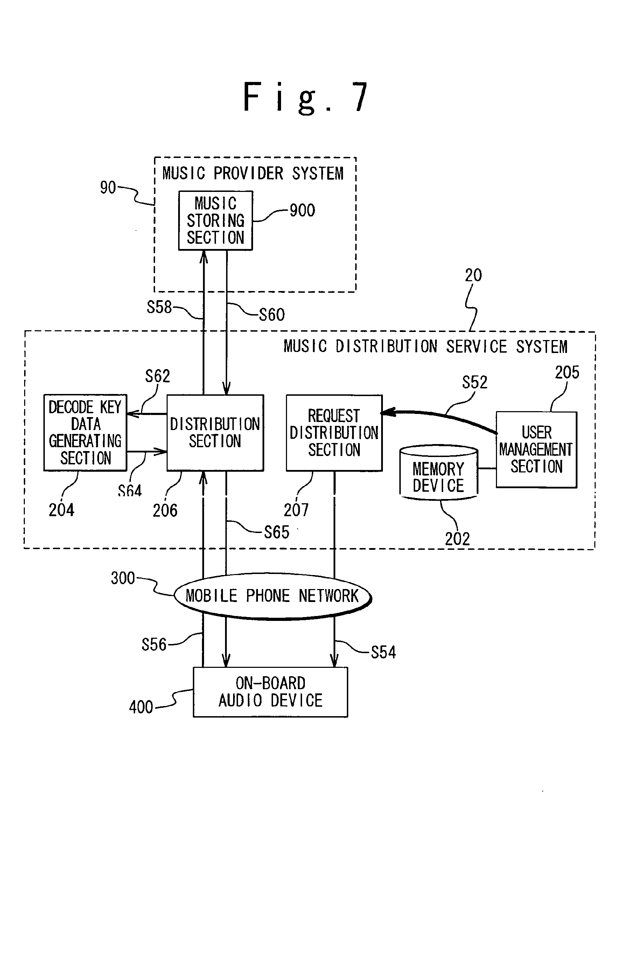

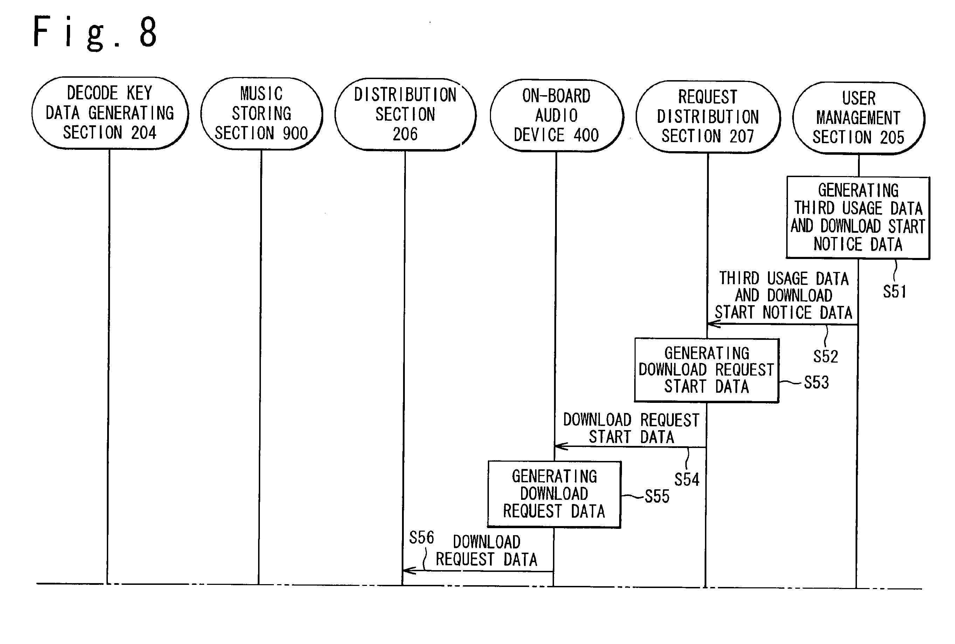

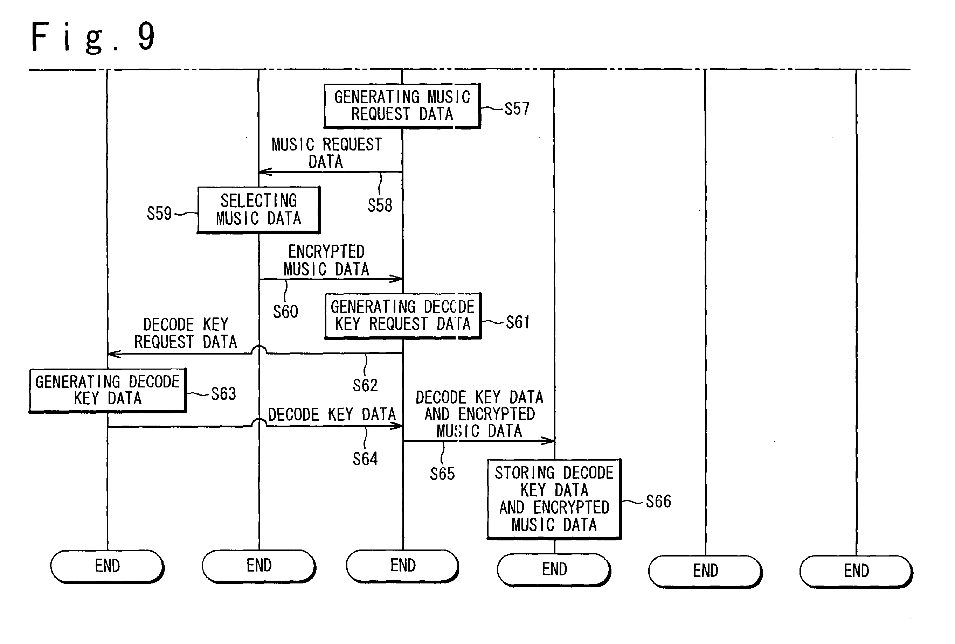

Fig. 7 is a schematic view showing the preparation operation for usage. Figs. 8 and 9 are flowcharts showing the preparation operation. That is an operation to prepare the music data selected by the user until the user starts to use the rental car.

When a predetermined period of time passes, the user management section 205 generates a third usage data. The third usage data includes a password and the second usage data that is supposed to be a formal one. The on-board audio device 400 uses the password for requesting the download of the music data. Because the user of the on-board audio device 400 is not identified by, for example, the on-board audio device ID data, the password should be used for identifying the user. The password is used only once for security and used to identify the user who tries to download and use the music data. It is important to adjust fees of using the music data with the copyright or neighboring right holder after use.

The user management section 205 also generates a download start notice data. The download start notice data indicates notifying a start of a request for the download (step S51). The user management section 205 outputs the third usage data corresponding to the reserved on-board audio device 400 and the download start notice data to the request distribution section 207 based on the third usage data. It is carried out at a time zone when a traffic of the mobile phone network 300 is low (step S52). The request distribution section 207 generates a download request start data based on the third usage data and the download start notice data (step S53). The download request start data indicates a start of the download request and includes the playing order, the selected music ID data, the password, and an end date of the rental period. The request distribution section 207 transmits the download request start data to the corresponding on-board audio device 400 through the dedicated line 12 and the mobile phone network 300 (step S54).

After receiving the download request start data and storing the selected music ID data and the end date, the on-board audio device 400 generates a download request data (step S55). The download request data indicates a request of the download and includes the playing order, the selected music ID data, the password, and an end date. The on-board audio device 400 transmits the download request data to the distribution section 206 through the mobile phone network 300 and the dedicated line 12 (step S56). Receiving the download request data, the distribution section 206 generates a music request data (step S57). Then, it transmits the music request data to the music storing section 900 through dedicated line 11 (step S58). The music request data includes the playing order and the selected music ID data. Receiving the music request data, the music storing section 900 selects the music data corresponding to the selected music ID data (step S59) . Then, it transmits the encrypted music data corresponding to the playing order to the distribution section 206 through the dedicated line 11 (step S60).

Receiving the music data, the distribution section 206 generates a decode key request data (step S61). Then, it transmits the decode key request data to the decode key data generating section 204 (step S62). The decode key request data includes the selected music ID data and the end date of the rental period. The decode key data generating section 204 generates a decode key data based on the selected music ID data and the end date of the rental period (step S63). Then, it transmits the decode key data to the distribution section 206 (step S64) . The distribution section 206 transmits a set of the playing order data, the music data (encrypted) and the decode key data to the on-board audio device 400 through the dedicated line 12 and the mobile phone network 300 (step S65) . The on-board audio device 400 stores the set of the playing order, the music data, the decode key data inside as a music play data.

In this way, the music data can be prepared to play for the user at the renting the rental car.

Thirdly, (3) the operation at using will be described bellow.

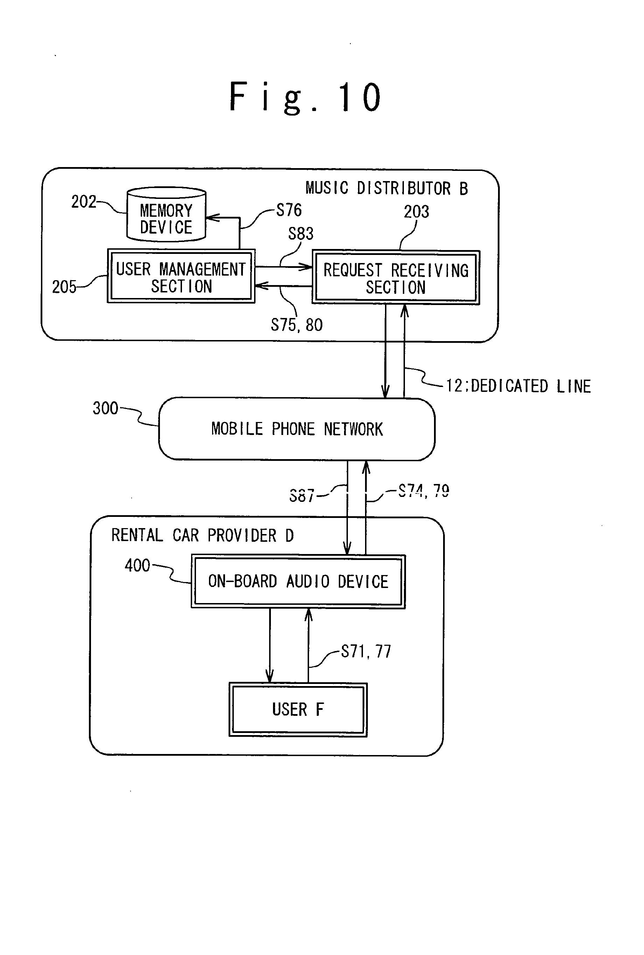

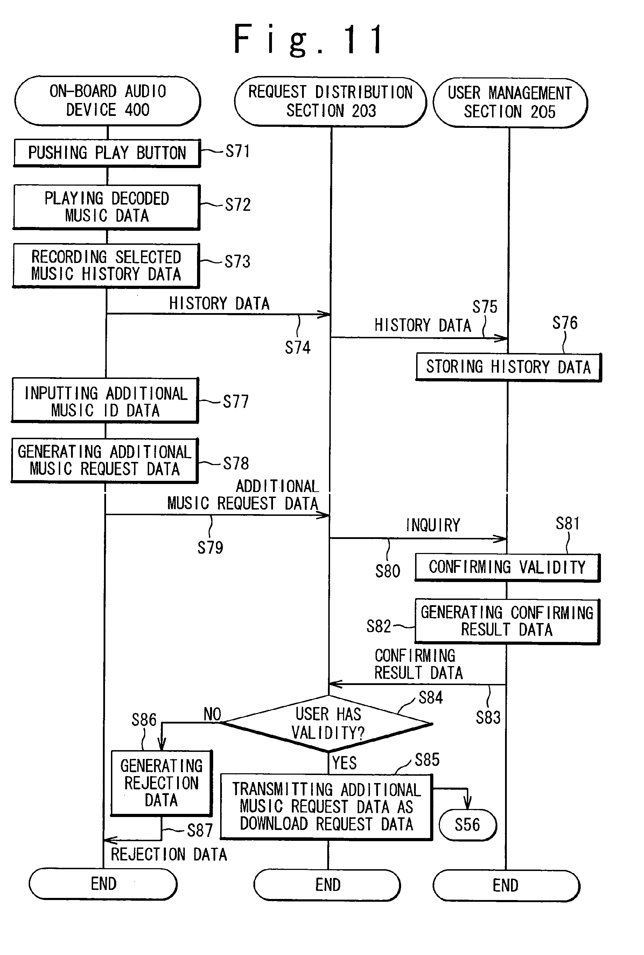

Fig. 10 is a schematic view showing the operation in using the rental car. Fig. 11 is a flowchart showing the operation in using the rental car.

When driving the rental car, the user pushes a play button of the on-board audio device 400 (step S71). Then, after decoding the music data of the music play data by using the decode key data, the on-board audio device 400 plays the decoded music data in order (step S72). The on-board audio device 400 records (stores) a selected music history data inside after a predetermined time (ex. 20 seconds) passes since the selected music data is played. The selected music history data shows that the selected music data is played (step S73).

Also, the on-board audio device 400 transmits all the selected music history data as a history data to the request receiving section 203 at a time zone that the mobile phone network 300 is less used (step S74) than usual. The request receiving section 203 transmits the history data to the user management section 205 (step S75). The user management section 205 stores the history data in the memory device 202 (step S76) .

Next, an operation to play the additional music when the user driving on the rental car will be described bellow.

The user can input the music ID data given in each music data so as to select an additional music data by the on-board audio device 400 (step S77). The on-board audio device 400, which receives the additional music ID data, generates an additional music request data (step S78) . The additional music request data indicates a request for additional music data and includes the on-board audio device ID data and the password data. The on-board audio device 400 transmits the additional music request data to the request receiving section 203 through the mobile phone network 300 (step S79) . The request receiving section 203 inquires the validity of the request for additional music data from the user management section 205 (step S80) . The user management section 205 confirms (verifies) the validity based on the additional music request data (step S81) . Then, the user management section 205 generates a confirming (verifying) result data and transmits it to the request receiving section 203 (steps S82,S83). If the confirming result data indicates that the user has no validity (step S84: NO), the request receiving section 203 generates a rejection data indicating the rejection to the request for additional music data (step S86). The request receiving section 203 outputs the rejection data to the on-board audio device 400 that notifies the rejection to the user. If the confirming result data indicates that the user has validity (step S84: YES), the request receiving section 203 transmits the additional music request data as the download request data in the step S56 to the distribution section 206 (step S85). The operation after the step S85 is same as the operation of the download request from steps S57 to S66) described in (2) the preparation operation.

Next, an operation that the user exceeds a rental period of the rental car will be described bellow.

In the case that the rental period of the rental car, the on-board audio device 400 refers to its own date data and the end date of the rental period to judges the excess of the rental period. When judging that the rental period exceeds the end date, the on-board audio device 400 notifies the user of the excess by displaying a message or turning on a LED lamp and the like. The user can continue to enjoy the service by the same operation mentioned above even after the excess. In this case, the on-board audio device 400 recognizes that the playing is in the exceeded period and transmits an excess data to the request receiving section 203. The excess data includes the end date of the rental period which the on-board audio device 400 stored.

The request receiving section 203 answers a new end date as a reply data corresponding to the excess data. In this case, for example, the new end date is set to be a next day of the former end date. The on-board audio device 400 updates the former data of the end date stored by itself to the received new end data and stores it. Because the decode key data of the music can not be used after the former end date, the on-board audio device 400 requests only the decode key data to distribution section 206 and receives again the new decode key data which rental period is newly set for playing the music.

Fourthly, (4) an operation after using the rental car will be described bellow with reference to the attached drawing.

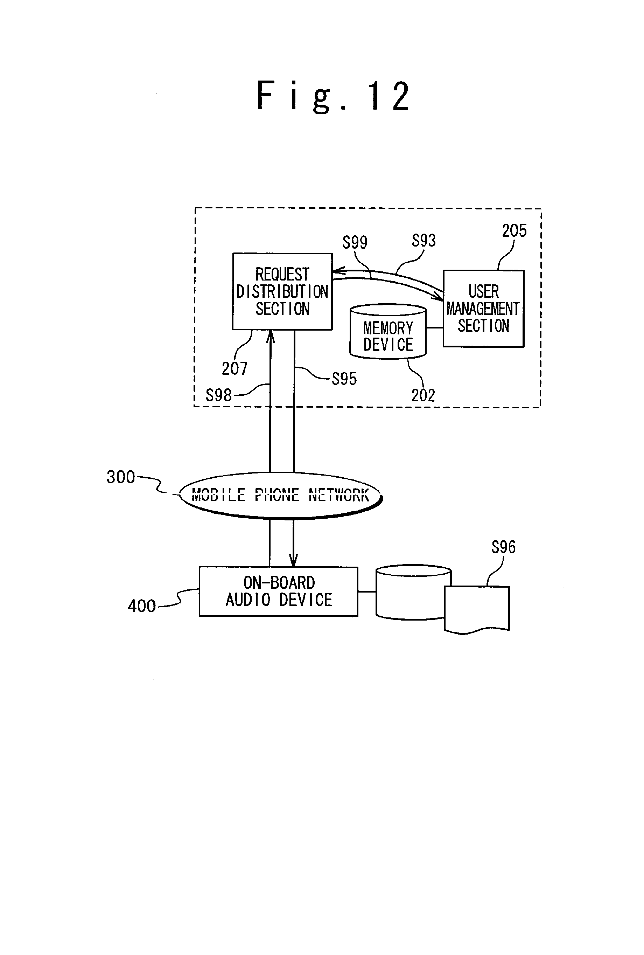

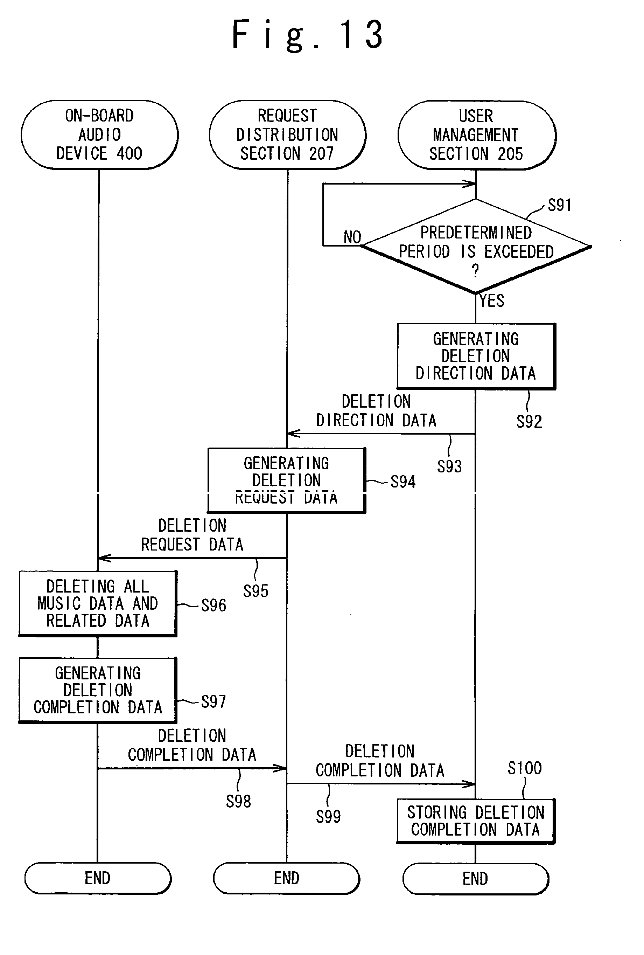

Fig. 12 is a schematic view showing the operation after using the rental car. Fig. 13 is a flowchart showing the operation after using the rental car. That is an operation of deleting data.

The music data stored in the on-board audio device 400 is deleted, when the end date of the rental period passes and the operation of on-board audio device 400 (playing music) is not carried out within an predetermined time period.

The user management section 205 checks whether or not a predetermined period is exceeded after the end date of the rental period passes based on the third usage data stored in the memory device 202 (step S91). If the time is exceeded, the user management section 205 generates a deletion direction data (step S92). The deletion direction data indicates a direction to make on-board audio device 400 delete all music data and related data. The user management section 205 transmits the deletion direction data the request distribution section 207 (step S93). Subsequently, the request distribution section 207 generates a deletion request data (step S94). The deletion request data indicates a request for deleting all music data and related data in the on-board audio device 400. The request distribution section 207 transmits the deletion request data to the on-board audio device 400 through the dedicated line 12 and the mobile phone network 300 (step S95). Receiving the deletion request data, the on-board audio device 400 deletes all music data and related data such as reservation ID data, the password data, the rental period data, the music data, the decode key data and the like (step S96). After deleting data, the on-board audio device 400 generates a deletion completion data indicating the completion of deleting data (step S97). The on-board audio device 400 transmits the deletion completion data to the user management section 205 (step S99) through the request distribution section 207 (step S98). The user management section 205 receives and stores the deletion completion data (step S100).

Also, even if not receiving the deletion request data by some reasons such as the on-board audio device 400 being outside the service area of the mobile phone network 300, the on-board audio device 400 may delete the music data by itself. That is, the on-board audio device 400 recognizes the exceeding of the end date of the rental period by comparing the date of the rental period and a time of a clock in the On-board audio device 400. Then, the on-board audio device 400 can delete the music data and related data after a predetermined period passes since the rental period is finished.

Moreover, when the deletion of the data in the on-board audio device 400 is needed because of the unusual situations such as the unfair or illegal use, the manager of the music distribution service system 20 can transmit the deletion request data to the on-board audio device 400 by operating the user management section 205.

In this way, the music data can be managed and delivered (distributed) without the third party and another media. Therefore, copyrights and a neighboring rights are protected without compromising a service quality, the adjustment data of music data are surely obtained and remained, and it is possible to provide the service with the network use efficiency improved.

Next, a second embodiment of the present invention will be described below with reference to attached drawings.

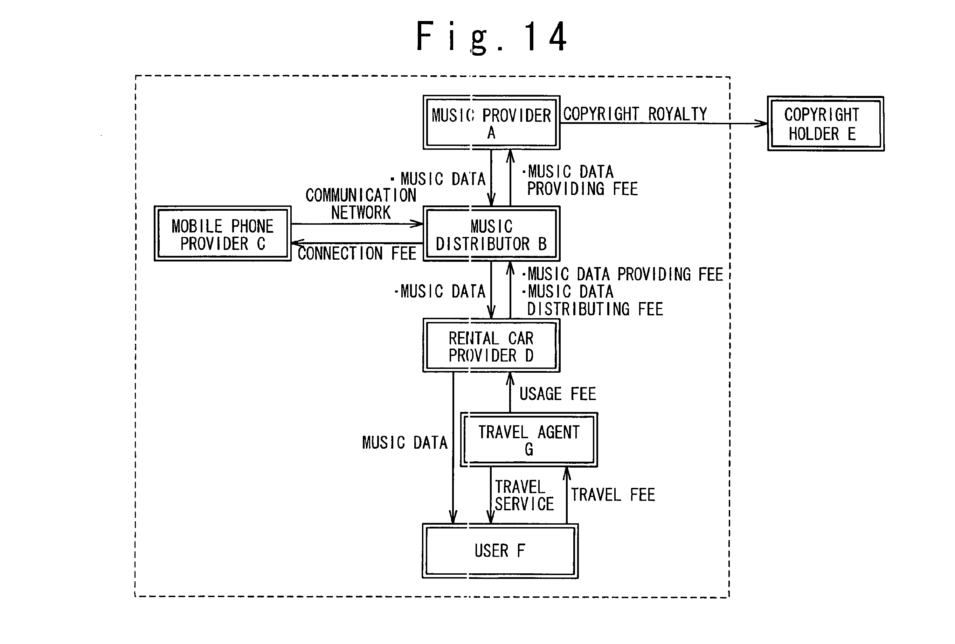

Fig. 14 is a schematic view showing an outline configuration of the second embodiment of the present invention.

In the second embodiment of the present invention, as shown in Fig. 14, a travel agent G is added to the configuration of the first embodiment of Fig. 1.

When a rental car is used for a travel, the user often takes other means of transportation (an airplane, a train and a ship and so on) to a travel destination and uses the rental car on the travel area. A travel agent G makes a travel plan with a combination of the rental car and the other means of transportation. A music distributor B or a music provider A provides music data which derives from the travel area and the travel season. Thereby, the travel can be produced to match an image of the user by the music that keyword is the travel. Therefore, travel service matched to the user's gusto can be provided to the user. It should be noted that the travel agent G charges the user for a service fee instead of the rental car provider D.

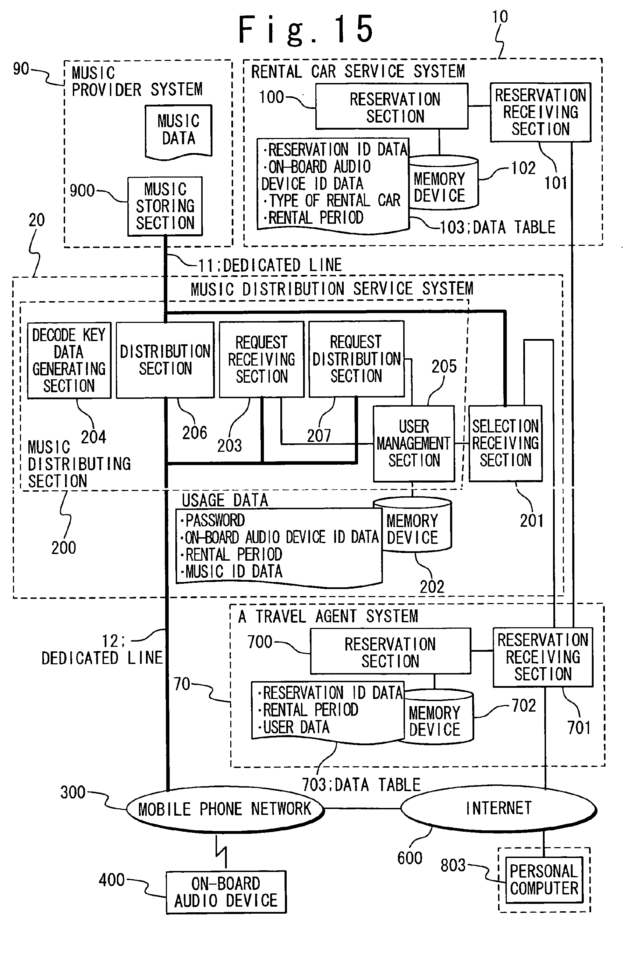

Fig. 15 is a block diagram showing a configuration of the second embodiment according to the present invention.

In the second embodiment of the present invention, as shown in Fig. 15, a travel agent system 70 is added to the configuration of the first embodiment of Fig. 3. The travel agent system 70 includes a reservation section 700, a reservation receiving section 701 and a memory device 702. The memory device 702 stores a data table 703 which includes a reservation ID data, a rental period data, a user data registered for arranging the travel by the travel agent G and the like. Each section is an information processing apparatus or a computer program stored in a recording media of the information apparatus.

The reservation receiving section 701 uploads an outline of a musical program combined with the travel plan for the user through the Internet 600. The musical program is prepared for a website on a selection receiving section 201 of a music distributing section 200 so as to match an utility of the travel agent G.

The user selects the travel plan by the reservation section 700 through the Internet 600 and the reservation receiving section 701. Then, the user selects a use of the rental car and the music delivery service. At this time, the reservation section 700 produces and stores the reservation ID in the data table 703, and transmits to the user and registers data of contents of the travel plan and a travel period inside. The user received the reservation ID selects a type of the rental car and the like on a website. The website is provided by the reservation receiving section 101 and the reservation section 100 of the rental car service system 10 linked to the system of the travel plan provided by the reservation section 700. In this time, the reservation ID data and the data of the rental period are stored and are registered on the reservation section 100 of the rental car service system 10.

Next, the processes same as the first embodiment of the present invention is carried out in the reservation section 100, the music distribution service system 20, and the music provider system 90. The reservation ID, which is produced in the reservation section 700, is transmitted to use to all systems and sections such as the music distribution service system 20.

The personal computer 801 and the mobile phone 802 may be installed in the rental car provider office.

The music data delivery system and the music data delivery method according to the present invention can provide (distribute) music data to be played in a rental car with lower cost and less loaded to resources of the communication network than the conventional method. The user can download and listen to the favorite music data in the rental car.

The present invention can certainly collect fees of provided music data from the user.

The present invention can provide the music data to the rental car without an infringement of copyrights and neighboring rights.

## Claims

1. A music data delivery system comprising:
a rental car service system (10); and
a music distribution service system (20),
wherein said rental car service system (10) receives a reservation request data, which indicates a request for a reservation of a rental car of a user, from an information terminal (80) through a communication network (300,600), carries out a reservation processing for said reservation to generate a reservation data based on said reservation request data, and transmits said reservation data to said information terminal (80) through said communication network (300, 600) ,
said reservation data includes a reservation ID data indicating an identification of said reservation, an on-board audio device ID data indicating an identification of an on-board audio device on said rental car, and a rental period data indicating a rental period of said rental car, and
said music distribution service system (20) receives said reservation data and a music ID data, which indicates an identification of a music data for using in said rental period requested by said user, from said information terminal (80) through said communication network (300, 600) , stores said music ID data and said reservation data in a memory device as a usage data, and transmits a music data corresponding to said music ID data in the predetermined time zone to an on-board audio device (400) corresponding to said on-board audio device ID data.

2. The music data delivery system according to claim 1, wherein said rental car service system (10) transmits a link data together with said reservation data to said information terminal (80) through said communication network (300,600),
said link data indicates a data for linking said music distribution service system (20) in said communication network (300,600), and
said information terminal (80) sends said reservation data and said music ID data to said music distribution service system (20) based on said link data.

3. The music data delivery system according to claim 1 or 2, wherein a traffic of said communication network (300,600) is low in said predetermined time zone.

4. The music data delivery system according to any one of claims 1 and 3, further comprising:
said on-board audio device (400),
wherein said music distribution service system (20) transmits an acquisition request start data to said on-board audio device (400) before transmitting said music data to said on-board audio device (400), said acquisition request start data indicates directing of an acquisition of said music data in said predetermined time zone and includes said music ID data and an acquisition ID data indicating an identification of said acquisition,
said on-board audio device (400) transmits said music request data to said music distribution service system (20) in said predetermined time zone in response to said acquisition request start data, said music request data indicates a request for said music data and includes said music ID data and said acquisition ID data, and
said music distribution service system (20) transmits said music data to said on-board audio device (400) in said predetermined time zone in response to said music request data.

5. The music data delivery system according to any one of claims 1 to 4, wherein said on-board audio device (400) plays said music data in response to said user's operation, makes and updates a history data stored in a memory device, and transmits said history data to said music distribution service system (20) in said predetermined time zone, said history data indicates a history that said on-board audio device (400) plays said music data.

6. The music data delivery system according to any one of claims 1 to 5, wherein said music distribution service system (20) judges an end of said rental period based on said reservation data, and transmits a deletion request data to said on-board audio device (400) , said deletion request data indicates a request for deleting said music data, and
said on-board audio device (400) deletes said music data in response to said deletion request data.

7. The music data delivery system according to claim 4, wherein said music distribution service system (20) receives said on-board audio device ID data, said acquisition ID data and an additional music ID data indicating an identification of an additional music data requested by said user, in said rental period from said on-board audio device (400), and transmits a music data corresponding to said additional music ID data to said on-board audio device (400) based on said on-board audio device ID data, said acquisition ID data and said additional music ID data.

8. The music data delivery system according to any one of claims 1 to 7, wherein said music distribution service system (20) searches for a plurality of candidate music ID data from a music database storing music data, based on a desired candidate data received from said information terminal (80),
said plurality of candidate music ID data indicates identifications of candidate music data, said candidate music data indicate candidates which said user requests for using in said rental period, said desired candidate data are data related and corresponding to said candidate music data, and
said music distribution service system (20) transmits said plurality of candidate music ID data to said information terminal (80), and receives said music ID data selected from said plurality of candidate music ID data by said user.

9. A rental car service system comprising:
a reservation receiving section (101) which receives a reservation request data indicating a request for a reservation of a rental car of a user from an information terminal through a communication network (300,600); and
a reservation section (100) which carries out a reservation processing for said reservation to generate a reservation data based on said reservation request data,
wherein said reservation data includes a reservation ID data indicating an identification of said reservation, an on-board audio device ID data indicating an identification of an on-board audio device (400) on said rental car, and a rental period data indicating a rental period of said rental car, and
said reservation receiving section (101) transmits said reservation data and a link data to said information terminal (80) through said communication network (300,600), said link data indicates a link to a music distribution service system (20) that executes a service to distribute a charged music data.

10. A music distribution service system comprising:
a selection receiving section (201) which receives a reservation data and a music ID data from an information terminal (80) through a communication network (300,600), wherein said reservation data indicates a reservation of a rental car of a user, said music ID data indicates an identification of a music data for using in said rental period requested by said user, said reservation data includes a reservation ID data indicating an identification of said reservation, an on-board audio device ID data indicating an identification of an on-board audio device on said rental car, and a rental period data indicating a rental period of said rental car;
a user management section (205) which stores said music ID and said reservation data in a memory device as a usage data; and
a distribution section (206) which transmits a music data corresponding to said music ID data in the predetermined time zone to an on-board audio device (400) corresponding to said on-board audio device ID data.

11. The music distribution service system according to claim 10, further comprising:
a request distribution section (207) which transmits an acquisition request start data to said on-board audio device (400) before transmitting said music data to said on-board audio device (400), wherein said acquisition request start data indicates directing of an acquisition of said music data in said predetermined time zone and includes said music ID data and an acquisition ID data indicating an identification of said acquisition,
wherein said distribution section (206) transmits said music data to said on-board audio device (400) in said predetermined time zone in response to a music request data, and
said music request data indicates a request for said music data from said on-board audio device (400) based on said acquisition request start data in said predetermined time zone in response to said acquisition request start data, and includes said music ID data and said acquisition ID data.

12. The music distribution service system according to claim 10 or 11, further comprising:
a request receiving section (203) which receives a history data from said on-board audio device (400) in said predetermined time zone, and transmits said history data to said user management section (205),
wherein said history data indicates a history that said on-board audio device (400) plays said music data.

13. The music distribution service system according to claim 11, wherein said request receiving section (203) receives said on-board audio device ID data, said acquisition ID data and an additional music ID data indicating an identification of an additional music data requested by said user, in said rental period from said on-board audio device (400), and
said user management section (205) transmits a music data corresponding to said additional music ID data to said on-board audio device (400) based on said on-board audio device ID data, said acquisition ID data and said additional music ID data.

14. The music distribution service system according to any one of claims 10 to 13, wherein said user management section (205) judges an end of said rental period based on said reservation data, and transmits a deletion request data to said on-board audio device (400), said deletion request data indicates a request of deleting said music data.

15. The music distribution service system according to any one of claims 10 to 14, wherein said selection receiving section (201) searches for a plurality of candidate music ID data from a music database storing music data, based on a desired candidate data received from said information terminal (80),
said plurality of candidate music ID data indicates identifications of candidate music data, said candidate music data indicate candidates which said user requests for using in said rental period, said desired candidate data are data related and corresponding to said candidate music data, and
said selection receiving section (201) transmits said plurality of candidate music ID data to said information terminal (80) , and receives said music ID data selected from said plurality of candidate music ID data by said user.

16. A music data delivery method comprising:
(a) a rental car service system (10) receiving a reservation request data indicating a request for a reservation of a rental car of a user from an information terminal (80) through a communication network (300,600);
(b) said rental car service system (10) carrying out a reservation processing for said reservation to generate a reservation data based on said reservation request data, and transmitting said reservation data to said information terminal (80) through said communication network (300,600), wherein said reservation data includes a reservation ID data indicating an identification of said reservation, an on-board audio device ID data indicating an identification of an on-board audio device on said rental car, and a rental period data indicating a rental period of said rental car;
(c) said music distribution service system (20) receiving said reservation data and a music ID data indicating an identification of a music data for using in said rental period requested by said user from said information terminal (80) through said communication network (300,600);
(d) said music distribution service system (20) storing said music ID data and said reservation data in a memory device as a usage data; and
(e) said music distribution service system (20) transmitting a music data corresponding to said music ID data in the predetermined time zone to an on-board audio device (400) corresponding to said on-board audio device ID data.

17. The music data delivery method according to claim 16, wherein said step (e) comprises:
(e1) said music distribution service system (20) transmitting an acquisition request start data to said on-board audio device (400) before transmitting said music data to said on-board audio device (400) , said acquisition request start data indicates directing of an acquisition of said music data in said predetermined time zone and includes said music ID data and an acquisition ID data indicating an identification of said acquisition,
(e2) said on-board audio device (400) transmitting said music request data to said music distribution service system (20) in said predetermined time zone in response to said acquisition request start data, said music request data indicates a request for said music data and includes said music ID data and said acquisition ID data, and
(e3) said music distribution service system (20) transmitting said music data to said on-board audio device (400) in said predetermined time zone in response to said music request data.

18. The music data delivery method according to claim 16 or 17, further comprising:
(f) said on-board audio device (400) playing said music data in response to said user's operation;
(g) said on-board audio device (400) making and updating a history data stored in a memory device; and
(h) said on-board audio device (400) transmits said history data to said music distribution service system (20) in said predetermined time zone, said history data indicates a history that said on-board audio device (400) plays said music data.

19. The music data delivery method according to any one of claims 16 to 18, further comprising:
(i) said music distribution service system (20) judging an end of said rental period based on said reservation data;
(j) said music distribution service system (20) transmitting a deletion request data to said on-board audio device (400), said deletion request data indicates a request of deleting said music data; and
(k) said on-board audio device (400) deleting said music data in response to said deletion request data.

20. The music data delivery method according to claim 17, further comprising:
(1) said music distribution service system (20) receiving said on-board audio device ID data, said acquisition ID data and an additional music ID data indicating an identification of an additional music data requested by said user, in said rental period from said on-board audio device (400); and
(m) said music distribution service system (20) transmitting a music data corresponding to said additional music ID data to said on-board audio device (400) based on said on-board audio device ID data, said acquisition ID data and said additional music ID data.

21. The music data delivery method according to any one of claims 16 to 20, wherein said step (c) comprises:
(c1) said music distribution service system (20) searching for a plurality of candidate music ID data from a music database storing music data, based on a desired candidate data received from said information terminal (80) , wherein said plurality of candidate music ID data indicates identifications of candidate music data, said candidate music data indicate candidates which said user requests for using in said rental period, said desired candidate data are data related and corresponding to said candidate music data,
(c2) said music distribution service system (20) transmitting said plurality of candidate music ID data to said information terminal (80), and
(c3) said music distribution service system (20) receiving said music ID data selected from said plurality of candidate music ID data by said user.

22. A music data delivery method comprising:
(n) a reservation receiving section (101) of a rental car service system (10) receiving a reservation request data indicating a request for a reservation of a rental car of a user from an information terminal through a communication network (300,600);
(o) a reservation section (100) of said rental car service system (10) carrying out a reservation processing for said reservation to generate a reservation data based on said reservation request data; and
(p) said reservation receiving section (101) transmitting said reservation data and a link data to said information terminal (80) through said communication network (300,600), said link data indicates a link to a music distribution service system (20) that executes a service to distribute a charged music data,
wherein said reservation data includes a reservation ID data indicating an identification of said reservation, an on-board audio device ID data indicating an identification of an on-board audio device (400) on said rental car, and a rental period data indicating a rental period of said rental car.

23. A music data delivery method comprising:
(q) a selection receiving section (201) of a music distribution service system (20) receiving a reservation data and a music ID data from an information terminal (80) through a communication network (300,600), wherein said reservation data indicates a reservation of a rental car of a user, said music ID data indicates an identification of a music data for using in said rental period requested by said user, said reservation data includes a reservation ID data indicating an identification of said reservation, an on-board audio device ID data indicating an identification of an on-board audio device on said rental car, and a rental period data indicating a rental period of said rental car;
(r) a user management section (205) of said music distribution service system (20) storing said music ID and said reservation data in a memory device as a usage data; and
(s) a distribution section (206) of said music distribution service system (20) transmitting a music data corresponding to said music ID data in the predetermined time zone to an on-board audio device (400) corresponding to said on-board audio device ID data.

24. The music data delivery method according to claim 22, wherein said step (s) comprises:
(s1) a request distribution section (207) of said music distribution service system (20) transmitting an acquisition request start data to said on-board audio device (400) before transmitting said music data to said on-board audio device (400), wherein said acquisition request start data indicates directing of an acquisition of said music data in said predetermined time zone and includes said music ID data and an acquisition ID data indicating an identification of said acquisition, and
(s2) said distribution section (206) transmitting said music data to said on-board audio device (400) in said predetermined time zone in response to a music request data,
said music request data indicates a request for said music data from said on-board audio device (400) based on said acquisition request start data in said predetermined time zone in response to said acquisition request start data, and includes said music ID data and said acquisition ID data.

25. The music data delivery method according to claim 23 or 24, further comprising:
(t) a request receiving section (203) of said music distribution service system (20) receiving a history data from said on-board audio device (400) in said predetermined time zone, and transmitting said history data to said user management section (205),
wherein said history data indicates a history that said on-board audio device (400) plays said music data.

26. The music data delivery method according to claim 24, further comprising:
(u) said request receiving section (203) receiving said on-board audio device ID data, said acquisition ID data and an additional music ID data indicating an identification of an additional music data requested by said user, in said rental period from said on-board audio device (400); and
(v) said user management section (205) transmitting a music data corresponding to said additional music ID data to said on-board audio device (400) based on said on-board audio device ID data, said acquisition ID data and said additional music ID data.

27. The music data delivery method according to any one of claims 23 to 26, further comprising:
(w) said user management section (205) judging an end of said rental period based on said reservation data, and transmits a deletion request data to said on-board audio device (400), said deletion request data indicates a request of deleting said music data.

28. The music data delivery method according to any one of claims 23 to 27, wherein said step (q) comprises:
(q1) said selection receiving section (201) searching for a plurality of candidate music ID data from a music database storing music data, based on a desired candidate data received from said information terminal (80), said plurality of candidate music ID data indicates identifications of candidate music data, said candidate music data indicate candidates which said user requests for using in said rental period, said desired candidate data are data related and corresponding to said candidate music data; and
(q2) said selection receiving section (201) transmitting said plurality of candidate music ID data to said information terminal (80), and receives said music ID data selected from said plurality of candidate music ID data by said user.

29. Computer program product with program code means for carrying out all steps according to claim 22 if the program runs on a computer.

30. Computer program product with program code means according to claim 29 which is stored on a storage means which can be read by the computer.

31. Computer program product with program code means for carrying out all steps according to any one of claims 23 to 28 if the program runs on a computer.

32. Computer program product with program code means according to claim 31 which is stored on a storage means which can be read by the computer.
